(19) Europäisches Patentamt
European Patent Office
Office européen des brevets

(11) EP 0 779 880 B1

(12) # EUROPÄISCHE PATENTSCHRIFT

(45) Veröffentlichungstag und Bekanntmachung des Hinweises auf die Patenterteilung:
**02.12.1998 Patentblatt 1998/49**

(21) Anmeldenummer: **95932666.1**

(22) Anmeldetag: **05.09.1995**

(51) Int Cl.[6]: **C02F 1/70**

(86) Internationale Anmeldenummer:
**PCT/EP95/03481**

(87) Internationale Veröffentlichungsnummer:
**WO 96/07617 (14.03.1996 Gazette 1996/12)**

(54) **VERFAHREN ZUR ENTFERNUNG VON CHLORAT- UND BROMATVERBINDUNGEN AUS WASSER DURCH KATALYTISCHE REDUKTION**

METHOD OF REMOVING CHLORATE AND BROMATE COMPOUNDS FROM WATER BY CATALYTIC REDUCTION

PROCEDE D'ELIMINATION DES CHLORATES ET BROMATES DE L'EAU PAR REDUCTION CATALYTIQUE

(84) Benannte Vertragsstaaten:
**AT BE CH DE ES FR GB IT LI NL PT SE**

(30) Priorität: **08.09.1994 DE 4431790**
**08.09.1994 DE 4431975**

(43) Veröffentlichungstag der Anmeldung:
**25.06.1997 Patentblatt 1997/26**

(73) Patentinhaber: **Solvay Umweltchemie GmbH**
**D-30173 Hannover (DE)**

(72) Erfinder:
- **BECKER, Arne**
  **D-30519 Hannover (DE)**
- **KOCH, Veronika**
  **D-30989 Gehrden (DE)**
- **SELL, Michael**
  **D-31228 Peine (DE)**
- **SCHINDLER, Hubert**
  **D-31311 Uetze (DE)**
- **NEUENFELDT, Gerhard**
  **D-31629 Estorf (DE)**

(74) Vertreter: **Lauer, Dieter, Dr.**
**Solvay Pharmaceuticals GmbH,**
**Hans-Böckler-Allee 20**
**30173 Hannover (DE)**

(56) Entgegenhaltungen:
**EP-A- 0 586 998** **WO-A-94/20423**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Entfernung von Wasserinhaltsstoffen, insbesondere von Verbindungen und Nebenprodukten der oxidativen Wasseraufbereitung.

Die bekannten Verfahren zur Wasseraufbereitung sind häufig mehrstufige Verfahren, wobei z. B. eine thermisch-alkalische, eine oxidative, eine biologische, oder eine adsorptive Behandlung in unterschiedlicher Weise miteinander verknüpft werden können.

Es ist bekannt, daß zur Trinkwassergewinnung Oberflächenwasser z. B. durch Uferfiltration genutzt werden. Aus hygienischen Gründen und zur Einhaltung der Grenzwerte der Trinkwasserverordnung müssen insbesondere die Keime und die organischen Substanzen entfernt werden.

Ebenso sind physikalische Prozesse wie z. B. Membrantrennverfahren oder Filtrationsverfahren bekannt und werden auch eingesetzt.

Bei der oxidativen Wasseraufbereitung, z. B. durch Desinfektion mit Chlor, Hypochlorit, Chlordioxid und Ozon, in Gegenwart von oxidierbaren Substanzen entstehen auch Nebenprodukte, z. B. Halogen-Sauerstoffverbindungen wie Chlorsauerstoffverbindungen oder Bromate, halogenierte Kohlenwasserstoffe z.B. Trihalogenmethane, die entfernt werden müssen, damit das Wasser zur Trinkwasserversorgung verwendet werden kann, oder als gereinigtes Abwasser z. B. in einen Vorfluter abgelassen werden kann oder als Brauchwasser in den Produktionsprozeß eingespeist werden kann.

Durch die oxidative Behandlung z. B. mit Ozon wird Halogenid z.B. das Chlorid oder Bromid nach folgendem Reaktionsmechanismus oxidiert.

$$O_3 + Hal^- \rightarrow 0_2 + OHal^-$$

$$2O_3 + OHal^- \rightarrow 2O_2 + HalO_3^-$$

Diese Reaktion ist sowohl pH-abhängig, oxidationsmittelmengenabhängig, als auch zeitabhängig.

Da Bromationen nachweisbar kanzerogene Wirkung haben, müssen sie aus dem Wasser entfernt werden. Die Weltgesundheitsorganisation (WHO) fordert, daß der Bromatgehalt im Trinkwasser 25 µg/l nicht überschritten werden darf, wobei zukünftig ein Grenzwert von 3µg/l anvisiert wird.

Da Chlorationen im Trinkwasser unerwünscht sind, müssen sie aus dem Wasser entfernt werden. Auch bei der Desinfektion mit Chlordioxid entstehen unerwünschte Nebenprodukte, wie z.B. Chlorite und Chlorate, die nachweislich hämolytische Anämien hervorrufen und somit im Trinkwasser nicht enthalten sein sollten.

Aber auch aus Wässern, die nicht als Trinkwasser genutzt werden sollen, müssen die genannten Inhaltsstoffe entfernt werden, da deren Oxidationspotential in vielen Fällen störend wirken kann.

EP 0 586 998 beschreibt ein Verfahren zur Abwasserbehandlung, mit dem adsorbierbare organische Halogenverbindungen (AOX) entfernt werden können. Das Abwasser wird zunächst thermisch-alkalisch und danach katalytisch behandelt.

Die Aufgabe der Erfindung besteht darin, ein Verfahren zur Wasserbehandlung zur Verfügung zu stellen, mit dem Halogen-Sauerstoffverbindungen in wirtschaftlicher Weise entfernt werden bzw. deren Reststoffkonzentrationen minimiert werden können.

Halogen-Sauerstoffverbindungen im Sinne der Erfindung sind Chlorat- und Bromatverbindungen.

Erfindungsgemäß werden diese Verbindungen an einem geträgerten Edelmetallkatalysator mit Wasserstoff reduziert.

Der reduktive Abbau von Bromat erfolgt nach folgender Gleichung:

$$BrO_3^- + 3H_2 \xrightarrow{Kat} Br^- + 3H_2O$$

Der reduktive Abbau von Chlorat erfolgt nach folgender Gleichung:

$$ClO_3^- + 3H_2 \xrightarrow{Kat} Cl^- + 3H_2O$$

Als Katalysatoren werden Edelmetallkatalysatoren, die Metalle der achten Nebengruppe des PSE als aktive Substanz enthalten z. B. Platin, Palladium, Iridium, Rhodium, vorzugsweise Palladium oder deren Kombination mit einem Metall der Kupfergruppe, vorzugsweise Kupfer oder Silber, insbesondere Kupfer, verwendet.

In einer bevorzugten Ausführungsform der Erfindung werden Palladium/Kupfer- bzw. Palladium-Trägerkatalysatoren eingesetzt.

Als Trägermaterial werden anorganische Oxide, z.B. $Al_2O_3$ vorzugsweise $\gamma$-$Al_2O_3$, $SiO_2$, $ZrO_2$, MgO oder $TiO_2$ verwendet. Kombinationen dieser Materialien oder andere Trägermaterialien wie z.B. Alumosilikate, Magnesiumalumosilikate oder Aktivkohle sind ebenfalls geeignet. Vorzugsweise werden solche anorganische Materialien verwendet, die wasser- und abriebfest sind.

Erfindungsgemäß wird in das zu behandelnde Wasser Wasserstoffgas eingetragen und das mit Wasserstoff beladene Wasser mit dem Katalysator kontaktiert.

In einer bevorzugten Variante wird ein Katalysator verwendet, der als Metallkomponente vorzugsweise Palladium und/oder Rhodium oder Palladium und ein Metall der Kupfergruppe, insbesondere Kupfer, enthält. Das Katalysatorträgermaterial wird in bekannter Weise mit der Metallkomponente imprägniert.

Verwendbar ist z.B. ein imprägnierter Träger, der eine inhomogene Verteilung des Metalls bzw. der Metalle mit einer Konzentrierung im Oberflächenbereich aufweist.

Geeignet sind ebenfalls Materialien, die einen Teilchendurchmesser im Bereich von 10 bis 5.000 µm, vorzugsweise 50 bis 600 µm haben.

Im Rahmen der vorliegenden Erfindung können Wässer und wäßrige Lösungen beliebiger Herkunft behandelt werden, sofern sie frei von Stoffen sind, die bekanntermaßen als Gifte für palladium-, rhodium- oder kupferhaltige Katalysatoren wirken oder das Trägermaterial angreifen. In der vorliegenden Erfindung bezeichnet der Ausdruck "Wasser" derartige Wässer und wäßrige Lösungen.

Einerseits kann das Verfahren zur Behandlung von Wasser eingesetzt werden, das in seinem Reinheitsgrad einem Wasser entspricht, das eine natürliche Filtration durchlaufen hat. Derartiges Wasser kann wasserlösliche Substanzen, z. B. anorganische Salze, in Größenordnungen, wie sie im Grundwasser anzutreffen sind, also z. B. bis zu einigen Gramm pro Liter, enthalten.

Derartige Wässer sind z. B. Grundwasser, Brunnenwasser, Quellenwasser, Oberflächenwässer oder Uferfiltrate oder bereits entsprechend vorgereinigte Abwässer, z. B. industrielle Abwässer, beispielsweise aus Rauchgaswäschen, aber auch Getränke wie Mineralwasser, Limonaden und Fruchtsäfte.

Das Verfahren eignet sich somit zur Anwendung im Rahmen der Trinkwasseraufbereitung sowie der Aufbereitung von Brauchwasser z.B. für die Lebensmittel- oder Getränkeindustrie.

Andererseits ist dieses Verfahren ebenfalls geeignet Halogensauerstoffverbindungen in hochbelasteten Abwässern (z.B. Chlorat-, Bromat-Konzentrationen > 3g/l) zu reduzieren.

Gemäß der Erfindung kann der Wasserstoffeintrag in das Wasser entweder durch direktes Einleiten von Wasserstoffgas oder mittels geeigneten Sättigungssystemen, wie statische Mischer, Blasensäulenreaktoren oder über Membranen erfolgen. Andere bekannte Methoden sind ebenfalls zum Wasserstoffeintrag geeignet.

In einer bevorzugten Variante des Verfahrens erfolgt die Begasung des Wassers mit Wasserstoff in an sich bekannter Weise, z. B. über Gassättiger, wobei es jedoch wesentlich ist, daß der Wasserstoff möglichst feinperlig und ohne Gasblasenbildung eingeführt und gleichmäßig in dem Wasser verteilt wird. Als besonders geeignet erweist sich dabei die an sich bekannte Permeationsbegasung. Hierbei wird der Gaseintrag in das Wasser über eine feste Membran, beispielsweise eine unverstärkte oder gewebeverstärkte Silikonkautschukmembran oder eine feste Stützmembran mit einer 5 bis 20 µm dünnen Silikonschicht, als Kompositmembran, durchgeführt. Ein wesentliches Merkmal der Permeationsbegasung ist der blasenfreie Gaseintrag aufgrund des ausschließlich auf Diffusions- und Löslichkeitsvorgängen beruhenden Stofftransportes in dem porenfreien Membranmaterial. Ein weiterer Vorzug der Permeationsbegasung liegt darin, daß der Gaseintrag durch einfache Vergrößerung des Gaspartialdruckes im Membransystem bis zur druckabhängigen Sättigungsgrenze des Wasserstoffs im Wasser, oder durch Erhöhung der Strömungsgeschwindigkeit des Wassers, wodurch eine Verkleinerung der Grenzschicht an der Phasengrenze Membran-Wasser erfolgt, gesteigert werden kann. Dies erweist sich als vorteilhaft, wenn größere Mengen Wasserstoff benötigt werden.

Der Wasserstoffeintrag kann entweder gleichzeitig mit dem Kontaktieren des Wassers mit dem Katalysator erfolgen oder getrennt. In einer bevorzugten Variante erfolgt der Wasserstoffeintrag vor der eigentlichen katalytischen Umsetzung.

Zum katalytischen Abbau von hohen Halogensauerstoffionenkonzentrationen wird vorteilhafterweise der Wasserstoff gleichzeitig mit dem Wasser in einen Dreiphasenreaktor (z.B. Rieselbettreaktor) mit dem Katalysator in Kontakt gebracht.

Es hat sich als zweckmäßig erwiesen, die Behandlung des Wassers in Gegenwart einer solchen Menge Wasserstoff durchzuführen, die mindestens den äquivalenten Mengen der zu entfernenden Stoffe entspricht, wobei beim Vorhandensein von weiteren reduzierbaren Stoffen diese ebenfalls reduziert werden.

Das erfindungsgemäße Verfahren kann bei Normaldruck oder geringem Überdruck, z. B. bis zu 10 Atmosphären,

arbeiten. Die Löslichkeit des Wasserstoffgases in dem Wasser liegt bei Normaldruck und Temperaturen zwischen 10 und 25 °C unter 2 mg/l und wird bei Verdoppelung des Druckes auch jeweils verdoppelt. Wo zur Reduktion größerer Mengen an Sauerstoffverbindungen entsprechend größere Mengen Wasserstoff benötigt werden, hat sich die Verwendung von Dreiphasenreaktoren bewährt.

Sofern die Begasung des Wassers mit Wasserstoff und der Kontakt mit dem Katalysator gleichzeitig erfolgen, wird das Wasser mit dem Katalysator während einer solchen Zeitdauer in Kontakt gebracht, welche nötig ist, um die erfindungsgemäß zu entfernenden Stoffe zu reduzieren. Die katalytische Behandlung kann sowohl im Festbett- als auch im Wirbelbett- oder Fließbettreaktor durchgeführt werden.

Die Behandlung kann sowohl kontinuierlich als auch diskontinuierlich erfolgen.

In einer Ausführungsform wird Wasser, das z. B. eine oxidative Behandlungsstufe bereits durchlaufen hat, in dem sich jedoch noch Halogen-Sauerstoffverbindungen sowie z. B. Restspuren von Ozon befinden, mit einem pH-Wert von 4 bis 12, vorzugsweise 5 bis 11 insbesondere 6,5 bis 9,0 in mindestens einen Reaktor, in dem sich der geträgerte Edelmetallkatalysator befindet, eingeleitet und bei 0 bis 100 °C, vorzugsweise 5 bis 40 °C, insbesondere 10 bis 25 °C und 1 bis 10 bar mit Wasserstoff behandelt.

Es ist ebenfalls Gegenstand der Erfindung, Wasser, das Chlorat- bzw. Bromationen enthält, ohne daß es oxidativ vorbehandelt wurde, direkt der katalytischen Reduktion zuzuführen.

So ist es beispielsweise möglich, Abwasser mit einem pH-Wert von 3 bis 14 und einer Bromatkonzentration von z.B. 4 g/l bei Temperaturen von 5 bis 90°C und einem Wasserstoffdruck von 1 bis 10 bar nach diesem Verfahren zu behandeln. Hierbei können Bromatumsätze von über 90% erzielt werden.

Gewünschtenfalls kann das Wasser mehrere kaskadenartig hintereinandergeschaltete, jeweils eine Begasungseinrichtung und einen Reaktor enthaltende Reaktionseinheiten nacheinander durchlaufen. Hierbei kann der pH-Wert des Wassers beim Weiterleiten von einer Reaktionseinheit in die nachfolgende Reaktionseinheit gegebenenfalls neu einreguliert werden. In einer anderen Verfahrensausführung kann auch ein Wasser, dessen Gehalt an erfindungsgemäß zu entfernenden Stoffen bei einem ersten Durchlaufen der Begasungseinrichtung und des Reaktors nicht vollständig entfernt wurde, nochmals in den Reaktionskreislauf zurückgeführt werden.

Für das erfindungsgemäße Verfahren werden Metallkatalysatoren eingesetzt, welche aus einem mit der Metallkomponente imprägnierten porösen Trägermaterial gebildet werden. Als Metallkomponente werden Palladium und/oder Rhodium verwendet. Es ist ebenfalls Gegenstand der Erfindung, Palladium in Kombination mit'einem Metall der Kupfergruppe zu verwenden oder auch Rhodium zu verwenden. Als Metalle der Kupfergruppe eignen sich insbesondere Kupfer und Silber. Vorzugsweise wird Kupfer eingesetzt.

Der Anteil der Metallkomponenten, am Gesamtkatalysator kann zwischen 0,1 und 10 Gew.-%, vorzugsweise zwischen 0,1 und 5, insbesondere zwischen 0,2 und 2,0 Gew.-% betragen.

Als günstig erweist sich ein Palladiumgehalt von 0,1 bis 2,0 Gew.-%, insbesondere 0,1 bis 1,0 Gew.-%, bezogen auf das Gesamtgewicht des Katalysators.

In einer bevorzugten Variante wird als Metallkomponente des Katalysators eine Kombination von Palladium mit Kupfer eingesetzt. Das Gewichtsverhältnis von Palladium zu Kupfer kann zwischen 1:1 und 8:1, insbesondere 1:1 und 4:1 liegen.

In einer Ausführungsform der Erfindung können Katalysatoren eingesetzt werden, deren Träger entweder aus porösem Material, welches eine bimodale Porenradienverteilung mit einem mindestens 20 %-igen Anteil bezogen auf das Gesamtporenvolumen an Makroporen mit einem Mindestradius von 2.000 Å besitzt, bestehen oder welche eine inhomogene Verteilung des Metalls mit einer Konzentrierung im Oberflächenbereich bei einer Schichtdicke von 20 bis 100 µm je nach Teilchendurchmesser, insbesondere bei einem Teilchendurchmesser von 50 bis 1.000 µm aufweisen oder solche, die als Pulver mit einem Teilchendurchmesser kleiner als 50 µm vorliegen.

Als poröse Trägermaterialien mit einer bimodalen Porenradienverteilung eignen sich Materialien mit einem Maximum der Porenradienverteilung im Bereich von kleinen Poren mit einem Radius bis zu etwa 400 Å, beispielsweise zwischen etwa 50 und 350 Å, und einem zweiten Maximum der Porenradienverteilung im Bereich von Makroporen mit einem Radius von mindestens etwa 2.000 Å. Als günstig erweist sich ein Trägermaterial mit einem Maximum der Porenradienverteilung im Bereich von kleinen Poren mit einem Radius von 50 bis 300 Å, insbesondere 50 bis 200 Å. Für den Makroporenbereich sind Porenradien im Bereich von etwa 5.000 bis etwa 20.000 Å günstig. Der Makroporenanteil der bimodalen Trägermaterialien soll ausreichend hoch sein, um eine schnelle Diffusion zu gewährleisten und kann je nach Art und Größe der Trägerteilchen variieren. Als zweckmäßig erweisen sich z. B. bimodale Trägermaterialien mit einem Makroporenanteil zwischen 20 und 80 %, beispielsweise 20 und 60 %, vorzugsweise 40 und 60 %, insbesondere 40 und 50 %, bezogen auf das Gesamtporenvolumen. Bei Teilchen mit einem homogener Porenverteilung sollten die meisten Poren einen Radius von 30 bis 100 Å aufweisen. Für pulverförmige Teilchen gilt prinzipiell das Gleiche.

Bei der Durchführung des Verfahrens sollten die reagierenden Agenzien schnell aus dem aktiven Bereich entfernt werden.

Eine schnelle Abdiffusion der reagierenden Agenzien aus dem katalytisch aktiven Bereich des Katalysators kann

auch dadurch gefördert werden, daß Katalysatoren eingesetzt werden, bei denen eine inhomogene Verteilung des Metalls auf dem Träger mit einer Konzentrierung im Oberflächenbereich vorliegt. Als zweckmäßig erweist sich z. B. eine inhomogene Metallverteilung, bei welcher das Metall an der Oberfläche mit einer Eindringtiefe zwischen 20 und 100 µm konzentriert ist.

Eine schnelle Abdiffusion der reagierenden Agenzien von dem Katalysator kann auch durch die Verwendung von pulverförmigen Katalysatoren, beispielsweise Katalysatorpulvern, deren Teilchen Teilchendurchmesser von unter 50 µm, insbesondere von unter 20 µm besitzen, erzielt werden.

Die BET-Oberflächen von Trägermaterialien, bzw. der Katalysatoren mit den vorstehend beschriebenen Strukturen können im Bereich von etwa 20 bis 360, insbesondere 60 bis 300 $m^2/g$ variieren. Für Trägermaterialien mit bimodaler Porenverteilung liegen die BET-Oberflächen typischerweise im Bereich von 20 - 30 bis zu 200 $m^2/g$, bei pulverförmigen Katalysatoren bzw. Katalysatoren mit homogener Metallverteilung im Bereich von 50 bis 200 $m^2/g$.

Es können auch Trägermaterialien eingesetzt werden, deren Porositäten sich von den vorher beschriebenen deutlich unterscheiden. So wurde gefunden, daß z.B. die Aufbringung einer porösen oxidischen Schicht auf einen praktisch nicht porösen Kern, wie z.B. aus Magnesiumalumosilikat, zu einem geeigneten Trägermaterial führt. Es wurde ebenfalls gefunden, daß Magnesiumalumosilikat ohne diese poröse Schicht ebenfalls geeignet ist.

Diese Trägermaterialien haben naturgemäß eine BET-Oberfläche im Bereich von < 1 bis 30 $m^2/g$.

Es können Trägerteilchen unterschiedlichster Form verwendet werden. So können die Träger z. B. in Form von Pulvern, Granulaten, Kugeln, Perlen, Zylindern, Hohlzylindern oder Hohlkugeln eingesetzt werden.

Für Anwendungen im Wirbelbett eignen sich auch kleinere Teilchengrößen, z. B. pulverförmige Katalysatoren.

Trägermaterialien mit bimodaler Porenradienverteilung können auf an sich bekannte Weise hergestellt werden. Beispielsweise können zur Herstellung von porösen keramischen Materialien mit bimodaler Porenradienverteilung den Trägermassen während der Herstellung Stoffe zugesetzt werden, die sich im Laufe des Herstellungsverfahrens wieder auswaschen oder ausbrennen lassen und dabei zur Bildung von Makroporen führen. Als sogenannte Ausbrennstoffe können verbrennbare organische Stoffe wie beispielsweise Holzmehl, Stärke, Saccharose oder ein Ammoniumsalz einer organischen Säure wie Ammoniumacetat, oder auch Ruß, zugegeben werden, welche bei dem anschließenden Brennen der Trägerteilchen aus dem Material ausbrennen und Makroporen hinterlassen. Dieses Verfahren ist insbesondere geeignet zur Herstellung von bimodalen Aluminiumoxidträgern. Beispielsweise können kugelförmige Aluminiumoxidträger nach dem in den DE-OS 25 04 463 und 25 46 318 beschriebenen Verfahren erhalten werden, indem man ein Aluminiumoxidhydrosol mit einer in der Wärme hydrolysierbaren Base, z.B. Hexamethylentetramin, vermischt und der Mischung in Wasser unlösliche verbrennbare organische Stoffe oder Ruß und gegebenenfalls noch Tonerde und/oder Tonerdehydrat zumischt, die Mischung dann in eine mit Wasser nicht mischbare Flüssigkeit bei erhöhter Temperatur, beispielsweise Temperaturen zwischen 60 und 100 °C eintropft oder einsprüht, die gebildeten Gelteilchen in der mit Wasser nicht mischbaren Flüssigkeit bei der Fälltemperatur altern läßt, sodann wäscht und trocknet und anschließend kalziniert.

Eine bimodale Porenradienverteilung kann auch in an sich bekannter Weise erhalten werden durch eine nachgeschaltete gezielte Temperung der Trägermaterialien bei Temperaturen im Bereich von ca. 600 bis ca. 1.000 °C. Dieses Verfahren eignet sich insbesondere zur Porenaufweitung in $SiO_2$-Trägern. So lassen sich z. B. $SiO_2$-Trägermaterialien mit Porenradien zwischen 50 und 350 Å durch nachträgliches Tempern in bimodale Träger überführen. Beispielsweise kann in $SiO_2$-Perlen mit Porenradien um 215 Å durch eine 5-stündige Temperaturbehandlung bei 700 °C und anschließendes einstündiges Tempern bei 800 °C ein 20 %-iger Anteil an Makroporen im Bereich von 5.000 bis 50.000 Å erzeugt werden.

Die Imprägnierung der Trägerteilchen mit der Metallkomponente kann nach an sich zur Katalysatorherstellung üblichen Methoden erfolgen. Beispielsweise können Metallsalze oder komplexe Metallverbindungen im Tränkverfahren, Sprühverfahren oder Fällungsverfahren auf das Trägermaterial aufgebracht werden und nach Trocknung und anschließender Kalzinierung in an sich bekannter Weise reduziert werden. So können beispielsweise die Trägerteilchen mit einer Lösung oder Suspensionen von Metallsalzen oder komplexen Metallverbindungen in Wasser oder einem organischen Lösungsmittel, beispielsweise einem niederen Alkohol wie Ethanol, oder Keton, oder deren Gemischen getränkt oder besprüht werden, nach dem Trocknen gegebenenfalls bei Temperaturen bis zu 600 °C, beispielsweise zwischen 500 und 600 °C, kalziniert werden und dann mit einem metallfreien Reduktionsmittel, vorzugsweise Wasserstoff oder gegebenenfalls unter thermischer Behandlung bei Temperaturen im Bereich bis zu 550 °C, beispielsweise zwischen ca. 200 und 550 °C, oder in wäßriger Phase mit Natriumborhydrid oder Natriumformiat bei Temperaturen zwischen 10 und 50 °C reduziert werden.

Die Metallverteilung auf dem Trägermaterial kann in an sich bekannter Weise durch die Art der Imprägnierung variiert werden. So kann z. B. beim Tränken des Trägermaterials mit einer Lösung einer löslichen Metallverbindung die Eindringtiefe des Metalls in das Trägermaterial gesteuert werden durch Variation der Tränkzeit, z. B. zwischen 1 und 30 min und des Lösungsmittels, beispielsweise Wasser oder ein schneller verdampfendes organisches Lösungsmittel, z. B. ein niederer Alkohol wie Ethanol, oder deren Gemische oder durch die Art der Metallverbindung, mit der getränkt werden soll, oder durch Veränderung des pH-Wertes.

Die Eindringtiefe des Metalls hängt also sowohl von der Zeit, dem pH-Wert als auch von der Metallverbindung ab. Durch kurze Tränkzeiten wird erreicht, daß das Metall hauptsächlich nur im Oberflächenbereich des Trägermaterials verbreitet wird. Eine weitgehende Konzentrierung des Metalls auf den Oberflächenbereich des Trägermaterials läßt sich auch erzielen im Fällungsverfahren, durch Aufsprühen einer Lösung oder Suspension der Metallverbindung oder durch Überziehen des Trägermaterials mit einer die Metallverbindung enthaltenden Flüssigkeit. Bei Katalysatoren mit einer inhomogenen Metallverteilung mit einer Konzentrierung des Metalls im Oberflächenbereich, sogenannten Schalenkatalysatoren, wird der Reaktionsablauf von Diffusionsvorgängen wesentlich unabhängiger als bei Katalysatoren mit homogener Metallverteilung.

In einer Ausführungsform wird das Verfahren zur Trinkwasseraufbereitung kontinuierlich durchgeführt. Diese bevorzugte Ausführungsform ist dadurch gekennzeichnet, daß man das Wasser kontinuierlich in einen Dosierbehälter einleitet, in welchem der pH-Wert kontrolliert und nötigenfalls durch Zusatz von Säure auf einen Wert von höchstens pH 12, vorzugsweise zwischen pH 4 und pH 11, insbesondere pH 6,5 und pH 9, eingestellt wird und danach über eine die Durchflußgeschwindigkeit regulierende Pumpe mit variabler Förderleistung durch eine oder mehrere Reaktionseinheiten, welche je eine Begasungseinheit und einen Reaktor enthalten, leitet, worin das Wasser zunächst in der Begasungseinheit geführt und darin mit Wasserstoffgas gegebenenfalls unter Druck begast wird und anschließend durch den ein Katalysatorbett mit dem Metallkatalysator enthaltenden Reaktor geführt wird, wobei das Wasser insgesamt so viele Reaktionseinheiten durchlaufen kann wie zur Reduktion der erfindungsgemäß zu entfernenden Stoffe notwendig sind.

Das erhaltene Wasser kann auf an sich bekannte Weise weiterverarbeitet werden. Das Wasser ist praktisch frei von Sauerstoff, Chlor, Chlorsauerstoff und Bromsauerstoffverbindungen. Es kann direkt für solche Zwecke eingesetzt werden, wo sauerstofffreies Wasser benötigt wird, z. B. als Brauereiwasser. Gewünschtenfalls kann es auch im Rahmen der Trinkwasseraufbereitung in an sich bekannter Weise zur Wiederaufnahme von Sauerstoff belüftet werden, wobei auch eventuell noch gelöste geringe Restmengen an Gasen entfernt werden.

Bei der Behandlung von Wasser mit hohen Konzentrationen an Halogensauerstoffverbindungen im Dreiphasenreaktor ist eine vorherige pH-Wert-Einstellung nicht erforderlich.

Die nachfolgenden Beispiele sollen die Erfindung erläutern, jedoch nicht einschränken.

**Beispiel 1:**

In einem Rührreaktor wurden 360 ml Wasser, das 2 mg/l $BrO_3^-$-Ionen enthielt vorgelegt. Im Rührreaktor befanden sich 5 g Pd-Katalysator (1 % Pd-Gehalt). Bei einem Wasserstoffeintrag von 1 l/h konnte nach einer Verweilzeit von 12 Minuten kein Bromat mehr nachgewiesen werden. Desweiteren wurde eine Menge von 1,2 mg/l Bromidionen als Reaktionsprodukt gebildet.

**Beispiel 2:**

Reaktionsbedingungen analog Beispiel 1:

Es wurde ein Pd/Cu-Katalysator (1 % Pd, 0,25 % Cu) verwendet. Das zu behandelnde Wasser enthielt 2 mg/l $BrO_3^-$-Ionen. Nach einer Verweilzeit von 12 Minuten konnte kein Bromat mehr nachgewiesen werden. Es wurden 1,25 mg/l Bromidionen als Reaktionsprodukt gebildet.

**Beispiel 3:**

Die Umsetzung des Bromats erfolgte an einem Katalysator-Fluidbett. Es wurden 100 g eines Pd-Cu-Trägerkatalsators (1 Gew.-% Pd, 0,25 Gew.-% Cu) eingesetzt.

Wasser mit einem $BrO_3^-$-Ionengehalt von 0,5 mg/l und einem pH-Wert von 6,3, wurde mit einer Durchflußrate von 11 l/h und bei 5 bar durch das Fluidbett geleitet. Im Wasser waren 20 ml/l Wasserstoffgas gelöst. Im abgeführten Wasser betrug die $BrO_3^-$-Ionenkonzentration im Mittel weniger als 0,01 mg/l, die $Br^-$-Ionenkonzentration konnte mit 0,3 bis 0,32 mg/l bestimmt werden.

**Beispiel 4:**

In einem Rührreaktor wurden 360 ml Wasser, das 5 mg/1 $ClO_3^-$-Ionen enthielt, vorgelegt. Im Rührreaktor befanden sich 5 g Pd-Katalysator (1 % Pd-Gehalt), bei einem Wasserstoffeintrag von 1 l/h konnte nach einer Verweilzeit von 15 Minuten die $ClO_3^-$-Ionenkonzentration auf einen Wert unter 0,1 mg/l gesenkt werden. Desweiteren wurde eine Menge von 2,1 mg/l Chloridionen gebildet.

**Beispiel 5 - 8:**

In einem Wirbelbettreaktor wurde an unterschiedlichen Pd-haltigen Alugel-Trägerkatalysatoren sowohl vollentsalztes Wasser (VE-Wasser) als auch Leitungswasser in Gegenwart von Wasserstoff behandelt.

Es wurden folgende Betriebsbedingungen eingestellt:

| | |
|---|---|
| Wasserdurchfluß | 71/h |
| Wasserstoffeintrag | 0,3 l/h (bei 20°C, 1bar) |
| Wassertemperatur | 10°C |
| pH-Wert | 7 |
| Druck | 5,8 bar (abs) |

Die erzielte Bromatreduktion zeigt die Tabelle 1.

Die Analysenwerte berücksichtigen für Bromid eine Nachweisgrenze von 20 µg/l und eine Standardabweichung von ±20 µg/l bzw. für Bromat eine Nachweisgrenze von 2 µg/l und eine Standardabweichung ± 2 µg/l.

**Beispiel 9:**

In einem Rührreaktor wurden 300 ml Wasser, das 972 mg/l Chlorationen enthielt, vorgelegt. Im Rührreaktor befanden sich 5 g eines Pd/Cu-Trägerkatalysators (0,23 % Pd, 0,28 % Cu auf Aluminiumoxid). Es wurden 2 l $H_2$/h eingetragen. Bei einer Reaktionstemperatur von 90°C konnten nach einer Reaktionszeit von 3 Stunden nur noch 35 mg/l Chlorationen, aber 406 mg/l Chloridionen nachgewiesen werden.

**Beispiel 10:**

In einem Rieselbettreaktor (Dreiphasen-Festbettreaktor) befanden sich 1021,6 g eines Pd-Katalysators [0,89 % Pd auf $ZrO_2$/Cordierit (Magnesiumaluminiumsilikat)]. Durch diesen Reaktor wurde zusätzlich zum Wasserstoff ein kontinuierlicher Volumenstrom von 3,7 l/h eines hochbelasteten Abwassers (pH 11,7) mit einer Bromationenkonzentration von 3000·mg/l gegeben. Die Reaktionstemperatur war 60°C; im Reaktor wurde ein Druck von 4 bar gemessen. Im Ablauf wurden Bromatkonzentration unter 50 mg/l gemessen, d.h. es wurde ein katalytischer Bromatabbau von über 98 % erreicht.

**Tabelle 1:**

| Bsp. Nr. | Katalysator Pd-Gehalt [%] | Katalysator Katalysatormenge [g] | Wassertyp | Zeit [d] | $BrO_3^-$ [µg/l] Eingang | $BrO_3^-$ [µg/l] Ausgang | $Br^-$ [µg/l] Eingang | $Br^-$ [µg/l] Ausgang |
|---|---|---|---|---|---|---|---|---|
| 5 | 0,5 | 30 | VE-Wasser | 1 | 80 | 1 | 10 | 50 |
| | | | | 5 | 74 | 1 | 10 | 50 |
| 6 | 1,0 | 30 | VE-Wasser | 1 | 110 | 1 | 10 | 79 |
| | | | | 4 | 99 | 1 | 10 | 41 |
| 7 | 1,0 | 70 | VE-Wasser | 1 | 105 | 1 | 10 | 33 |
| | | | | 5 | 118 | 1 | 10 | 60 |
| | | | | 10 | 189 | 1 | 10 | 24 |
| | | | | 16 | 65 | 1 | 10 | 40 |
| 8 | 1,0 | 70 | Leitungswasser | 6 | 80 | 1 | 65 | 110 |
| | | | | 10 | 65 | 5,7 | 70 | 100 |
| | | | | 17 | 73 | 5,3 | 60 | 70 |
| | | | | 19 | 25 | 6,9 | 70 | 75 |

## Patentansprüche

1. Verfahren zur Entfernung von Chlorat- und Bromatverbindungen aus Wasser, dadurch gekennzeichnet, daß das Wasser in Gegenwart von Wasserstoff an einem geträgerten Edelmetallkatalysator behandelt wird.

2. Verfahren nach Anspruch 1, dadurch gekennzeichnet, daß ein Katalysator der Metalle oder Metallverbindungen der achten Nebengruppe des PSE, insbesondere Palladium als aktive Komponente oder deren Kombination mit einem Metall der Kupfergruppe enthält, verwendet wird.

3. Verfahren nach Anspruch 1 und 2, dadurch gekennzeichnet, daß als Trägermaterial anorganische Oxide, z.B. $Al_2O_3$, $SiO_2$, $ZrO_2$, MgO oder $TiO_2$ allein oder in Kombination miteinander verwendet werden.

4. Verfahren nach Anspruch 1 bis 3, dadurch gekennzeichnet, daß als Trägermaterial Alumosilikat, Magnesiumalumosilikat oder Aktivkohle verwendet wird.

5. Verfahren nach Anspruch 1 bis 4, dadurch gekennzeichnet, daß das Trägermaterial $ZrO_2$ und Magnesiumalumosilikat enthält.

6. Verfahren nach Anspruch 1 bis 5, dadurch gekennzeichnet, daß das Trägermaterial Magnesiumalumosilikat enthält.

7. Verfahren nach Anspruch 1 bis 6, dadurch gekennzeichnet, daß als Trägermaterial $\gamma$-Aluminiumoxid verwendet wird.

8. Verfahren nach Anspruch 1 bis 7, dadurch gekennzeichnet, daß als Metall der Kupfergruppe Kupfer oder Silber, vorzugsweise Kupfer verwendet wird.

9. Verfahren nach Anspruch 1 bis 8, dadurch gekennzeichnet, daß der Anteil der Metallkomponenten am Gesamtkatalysator zwischen 0,1 und 10 Gew.-% beträgt.

10. Verfahren nach Anspruch 1 bis 9, dadurch gekennzeichnet, daß der Katalysator einen Palladiumgehalt von 0,1 bis 5, vorzugsweise 0,2 bis 2 Gew.-%, bezogen auf das Gesamtgewicht des Katalysators, enthält.

11. Verfahren nach Anspruch 1 bis 10, dadurch gekennzeichnet, daß ein mit Palladium und Kupfer imprägnierter Katalysator eingesetzt wird.

12. Verfahren nach Anspruch 1 bis 11, dadurch gekennzeichnet, daß die katalytische Behandlung in mindestens einem Fließbett-, Festbett- oder Wirbelbettreaktor erfolgt.

13. Verfahren nach Anspruch 1 bis 12, dadurch gekennzeichnet, daß die katalytische Behandlung in einem Zwei- oder Dreiphasenreaktor erfolgt.

14. Verfahren nach Anspruch 1 bis 13, dadurch gekennzeichnet, daß der Wasserstoffeintrag in das Wasser entweder durch direktes Einleiten von Wasserstoffgas oder mittels Sättigungssysteme oder über Membrane erfolgt.

15. Verfahren nach Anspruch 1 bis 14, dadurch gekennzeichnet, daß der Wasserstoffeintrag gleichzeitig mit dem Kontaktieren des Wassers mit dem Katalysator erfolgt.

16. Verfahren nach Anspruch 1 bis 15, dadurch gekennzeichnet, daß der Wasserstoffeintrag vor der katalytischen Umsetzung erfolgt.

17. Verfahren nach den Anspruch 1 bis 16, dadurch gekennzeichnet, daß das Wasser bei 0 bis 100°C, und 1 bis 10 bar in Gegenwart von Wasserstoff mit dem Katalysator kontaktiert wird.

## Claims

1. A method for removing chlorate and bromate compounds from water, characterised in that the water is treated in

the presence of hydrogen on a supported precious-metal catalyst.

2. A method according to Claim 1, characterised in that a catalyst which contains metals or metal compounds of the eighth subgroup of the periodic table, in particular palladium, as active constituent or a combination thereof with a metal of the copper group is used.

3. A method according to Claims 1 and 2, characterised in that inorganic oxides, e.g. $Al_2O_3$, $SiO_2$, $ZrO_2$, MgO or $TiO_2$, alone or in combination with each other, are used as support material.

4. A method according to Claims 1 to 3, characterised in that alumosilicate, magnesium alumosilicate or activated carbon is used as support material.

5. A method according to Claims 1 to 4, characterised in that the support material contains $ZrO_2$ and magnesium alumosilicate.

6. A method according to Claims 1 to 5, characterised in that the support material contains magnesium alumosilicate.

7. A method according to Claims 1 to 6, characterised in that $\gamma$-aluminium oxide is used as support material.

8. A method according to Claims 1 to 7, characterised in that copper or silver, preferably copper, is used as the metal of the copper group.

9. A method according to Claims 1 to 8, characterised in that the proportion of metal constituents in the entire catalyst is between 0.1 and 10% by weight.

10. A method according to Claims 1 to 9, characterised in that the catalyst has a palladium content of 0.1 to 5, preferably 0.2 to 2, % by weight, relative to the total weight of the catalyst.

11. A method according to Claims 1 to 10, characterised in that a catalyst impregnated with palladium and copper is used.

12. A method according to Claims 1 to 11, characterised in that the catalytic treatment is effected in at least one moving-bed, fixed-bed or fluidised-bed reactor.

13. A method according to Claims 1 to 12, characterised in that the catalytic treatment is effected in a two-phase or three-phase reactor.

14. A method according to Claims 1 to 13, characterised in that the introduction of hydrogen into the water is effected either by direct introduction of hydrogen gas or by means of saturation systems or via membranes.

15. A method according to Claims 1 to 14, characterised in that the introduction of hydrogen is effected simultaneously with the contacting of the water with the catalyst.

16. A method according to Claims 1 to 15, characterised in that the introduction of hydrogen is effected before the catalytic reaction.

17. A method according to Claims 1 to 16, characterised in that the water is contacted with the catalyst at 0 to 100°C and 1 to 10 bar in the presence of hydrogen.

**Revendications**

1. Procédé d'élimination des composés de chlorate et de bromate de l'eau, caractérisé en ce qu'on traite l'eau en présence d'hydrogène sur un catalyseur en métal noble sur support.

2. Procédé selon la revendication 1, caractérisé en ce qu'on utilise un catalyseur contenant comme composant actif des métaux ou composés de métaux du huitième groupe secondaire de la classification périodique des éléments, en particulier le palladium, ou leurs combinaisons avec un métal du groupe du cuivre.

**3.** Composé selon les revendications 1 et 2, caractérisé en ce qu'on utilise comme support des oxydes inorganiques, par exemple $Al_2O_3$, $SiO_2$ , $ZrO_2$, MgO ou $TiO_2$ seuls ou en combinaison entre eux.

**4.** Procédé selon les revendications 1 à 3, caractérisé en ce qu'on utilise comme support un silicate d'aluminium, un aluminosilicate de magnésium ou du charbon actif.

**5.** Procédé selon les revendications 1 à 4, caractérisé en ce que le support contient $ZrO_2$ et un aluminosilicate de magnésium.

**6.** Procédé selon les revendications 1 à 5, caractérisé en ce que le support contient un aluminosilicate de magnésium.

**7.** Procédé selon les revendications 1 à 6, caractérisé en ce qu'on utilise comme support le $\gamma$-oxyde d'aluminium.

**8.** Procédé selon les revendications 1 à 7, caractérisé en ce qu'on utilise comme métal du groupe du cuivre le cuivre ou l'argent, de préférence le cuivre.

**9.** Procédé selon les revendications 1 à 8, caractérisé en ce que la proportion des composants métalliques par rapport à l'ensemble du catalyseur est comprise entre 0,1 et 10% en poids.

**10.** Procédé selon les revendications 1 à 9, caractérisé en ce que le catalyseur a une teneur en palladium de 0,1 à 5, de préférence de 0,2 à 2% en poids, par rapport au poids total du catalyseur.

**11.** Procédé selon les revendications 1 à 10, caractérisé en ce qu'on utilise un catalyseur imprégné avec du palladium et du cuivre.

**12.** Procédé selon les revendications 1 à 11, caractérisé en ce qu'on effectue le traitement catalytique dans au moins un réacteur à lit fluidisé, à lit fixe ou à tourbillon.

**13.** Procédé selon les revendications 1 à 12, caractérisé en ce qu'on procède au traitement catalytique dans un réacteur à deux ou trois phases.

**14.** Procédé selon les revendications 1 à 13, caractérisé en ce que l'apport d'hydrogène dans l'eau s'effectue soit par introduction directe de gaz hydrogène, soit au moyen de systèmes de saturation, soit par l'intermédiaire de membranes..

**15.** Procédé selon les revendications 1 à 14, caractérisé en ce qu'on procède à l'apport d'hydrogène en même temps que la mise en contact de l'eau avec le catalyseur.

**16.** Procédé selon les revendications 1 à 15, caractérisé en ce qu'on procède à l'apport d'hydrogène avant la réaction catalytique.

**17.** Procédé selon les revendications 1 à 16, caractérisé en ce qu'on met l'eau en contact avec le catalyseur en présence d'hydrogène entre 0 et 100°C et entre 1 et 10 bars.